# EUROPEAN PATENT APPLICATION

(11) **EP 2 072 813 A2**
(43) Date of publication of application: **24.06.2009**
(21) Application number: 08170926.3
(22) Date of filing: 08.12.2008
(51) Int. Cl.: F03D 7/02

(54) **Control system and method for operating a wind farm**

(30) Priority: 19.12.2007 US 959831
(71) Applicant: General Electric Company, Schenectady, NY 12345 (US)
(72) Inventor: Scholte-Wassink, Hartmut, 49828, Lage (DE)
(74) Representative: Bedford, Grant Richard

(57) **Abstract**

A method for operating a wind farm (10) which includes a wind farm control system (5000) and at least two wind turbines (100, 101), which are connected via an internal grid (200), is provided. The method includes determining the actual power consumption of the wind farm (10); and adjusting the power production of at least one of the wind turbines (100, 101) so that the actual power production and actual power consumption of the wind farm (10) are substantially equal. Furthermore, a wind farm control system (5000) arranged for balancing the power production and consumption of a wind farm (10) is provided.

## Description

A method for operating a wind farm in a state of balanced power production and consumption is disclosed herein. Further, a control system for balancing the power production and consumption of a wind farm is disclosed herein.

According to a first aspect of the present invention, method for operating a wind farm which includes a wind farm control system and at least two wind turbines is provided. The at least two wind turbines are connected via an internal grid. According to an aspect, the method includes a step of determining the actual power consumption of the wind farm; and a step of adjusting the actual power production of at least on of the wind turbines so that the actual power production and actual power consumption of the wind farm are substantially equal.

Further, a method for operating a wind farm which includes a wind farm control system and several power sources, which are connected via an internal grid, is provided. At least two of the power sources are wind turbines and at least one power source is selected from a group consisting of a fuel power source, a battery-based power source and a solar power source. According to another aspect, the method includes a step of determining the actual power consumption of the wind farm; and a step of adjusting the actual power production of at least on of the power sources so that the power actual production and actual power consumption of the wind farm are substantially equal.

In yet another aspect, a wind farm control system is provided which is arranged for controlling the wind farm in state, in which the actual power production and actual power consumption of the wind farm are substantially equal. The wind farm control system includes a controller which is adapted to determine the actual power consumption and actual power balance of the wind farm and to determine power generation instructions for the wind turbines. The wind farm control system further includes a communication device which is adapted to transmit power generation instructions to each of the wind turbines of the wind farm.

Further aspects, advantages and features are apparent from the dependent claims, the description and the accompanying drawings, in which:
Fig. 1 shows a schematic illustration of a wind farm wherein aspects of the present technique are applicable.
Fig. 2 shows a scheme of a central controller as used in several embodiments.
Fig. 3 illustrates the functional components of an exemplary wind turbine as used in several embodiments.
Fig. 4 shows a flow diagram of a method for operating a wind farm according to an embodiment.
Fig. 5 shows a flow diagram of a method for operating a wind farm which is based upon measuring of internal grid frequency according to another embodiment.
Fig. 6 shows a flow diagram of a method for operating a wind farm which is based upon measuring of internal grid voltage according to yet another embodiment.
Fig. 7 shows a flow diagram of a method for operating a wind farm which is based upon measuring of internal grid voltage and current according to still another embodiment.
Fig. 8 shows a flow diagram of a method for operating a wind farm according to yet another embodiment.
Fig. 9 shows a flow diagram of a method for operating a wind farm according to still an embodiment.
Fig. 10 shows a flow diagram of a method for operating a wind farm according to yet another embodiment.
Fig. 11 shows a flow diagram of a method for operating a wind farm according to still another embodiment.
Fig. 12 shows a scheme of a control system according to an embodiment.
Fig. 13 shows a diagram of computer program modules and flow of information for controlling a wind farm as used in several embodiments.

Reference will now be made in detail to the various embodiments of the invention, one or more examples of which are illustrated in the figures. Each example is provided by way of explanation of the invention, and is not meant as a limitation. For example, features illustrated or described as part of one embodiment can be used on or in conjunction with other embodiments to yield yet a further embodiment. It is intended that such modifications and variations are included herewith.

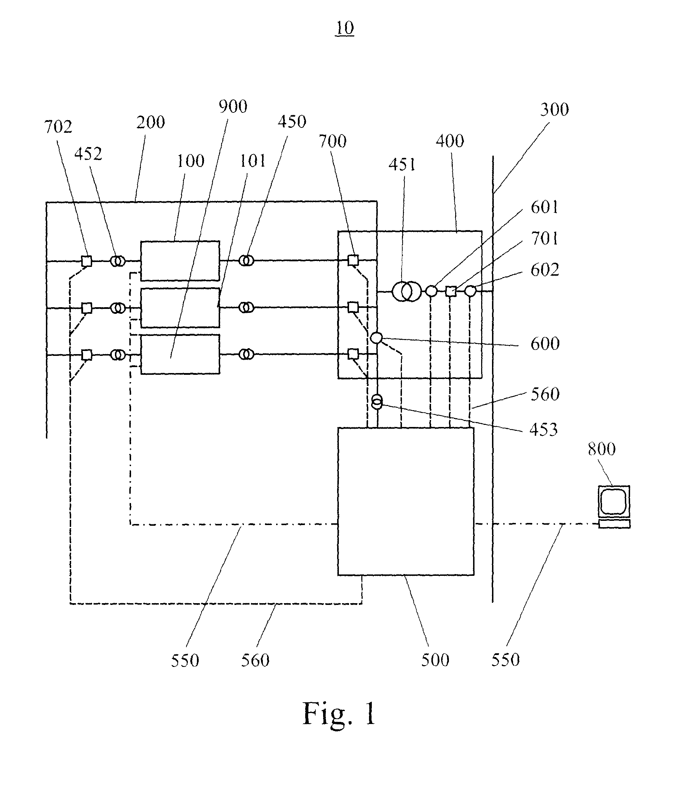

In Fig. 1 a schematic illustration of a wind farm 10 is shown. Two wind turbines 100 and 101 are connected via an internal grid 200 with a transformer substation 400 using feeders 700. The power produced by the wind turbines 100 and 101 may be stepped up in voltage by turbine transformers 450 before being coupled to the internal grid 200. The internal grid 200 is typically a medium voltage, three-phase alternating current (ac) network operating e.g. at a few kV up to a few 10 kV and 50 Hz or 60 Hz. A station transformer 451 of the transformer substation 400 is typically used to step up voltage from the internal grid voltage to a required transmission voltage of the external, main or utility grid 300 to which the transformer substation 400 can be connected at the point-of-common-coupling (PCC) using a suitable power switch 701. Further, the internal grid 200 powers a central controller 500 and the wind turbines 100 and 101 via transformers 452 and 453. The central controller 500 is arranged for communication with the wind turbines 100 and 101 via communication links 550, which may be implemented in hardware and/or software. Further, the central controller 500 may be configured to communicate via the communication links 550 with an additional power source 900, such as a small (e.g. 100 kW) diesel aggregate, which may be connected in addition to the internal grid 200. Typically, the communication links 550 are realized as an Ethernet LAN which will also enable remote control using a SCADA (Supervisory, Control and Data Acquisition) computer 800. However, the communication links 550 may also be configured to remotely communicate data signals to and from the central controller 500 in accordance with any fiber optic, wired or wireless communication network known to one skilled in the art. Such data signals may include, for example, signals indicative of operating conditions of individual wind turbine which are transmitted to the central controller 500 and various command signals communicated by the central controller 500 to the wind turbines 100 and 101. The central controller 500 is further in communication with the internal grid 200 and the external grid via sensors 600 to 602, such as voltage, current, frequency, power sensors or the like. Note that each of the sensors 600 to 602 may represent different sensors, e.g. for each phase line. Further, the central controller 500 is typically operable to control various switching devices or actuators, such as feeders 700, power switches 701 and 702, capacitors (not shown) and reactors (not shown) via communication links 560 to control e.g. frequency, active and reactive power output of the wind farm 10. In an ac electric system the current, I, and the voltage, V, can be out of phase. Consequently, the product of current and voltage S=I*V can be complex. In the context of this application, the term power refers to the active or real power P=Re(S), i.e. to the energy that is transferred per unit of time. In contrast, the imaginary part of S is referred to as reactive power Q=Im(S) within the context of this application. Typically, the communication links 560 are realized as a CAN (Controller Area Network) - bus. Again, the communication links 560 may also be configured to remotely communicate data signals to and from the central controller 500 in accordance with any fiber optic, wired or wireless communication network known to those skilled in the art. Note, that the dashed and dashed-dotted lines in Fig. 1 only indicate that there are links between the central controller 500 and the other devices. They do not necessarily reflect the topology of the used communication links 550 and 560.

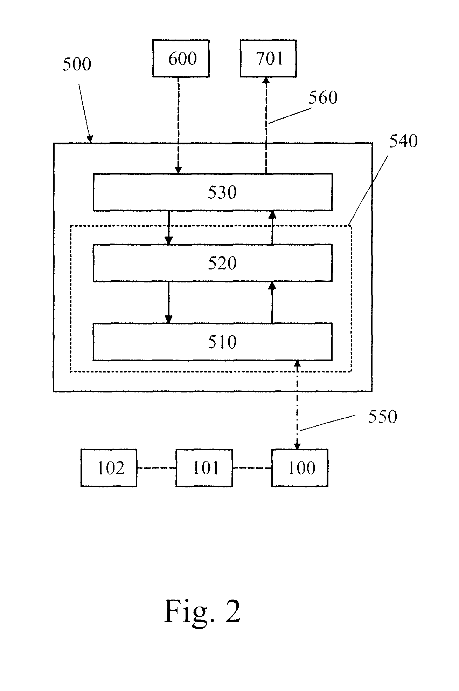

Fig. 2 shows a scheme of the central controller 500 which operates as a supervisory control of the wind farm 10. The central controller 500 communicates with each wind turbine 100 - 102 located in the wind farm 10 and typically performs a closed loop control or regulation such that the wind farm 10 produces active and reactive power according to given request or global set points of the wind farm 10. It should be understood, that the term "control" can also refer to "regulate" or "regulation". Typically, the central controller 500 reads the actual reactive power and actual (real or active) power at the PCC; compares the measured values with the global set points and issues power and VAR (voltage-ampere-reactive) commands or set points to each wind turbine 100-102 on any deviation. This effectively makes the wind farm 10 acts as a single power production unit instead of individual wind turbines 100-102. For example, the central controller 500 may receive global set points for the total active and reactive power to be fed into or received from the external grid 300 from a control centre (not shown) of the external grid or the SCADA computer via an Ethernet LAN 550. For this purpose the central controller 500 includes a communication device 510, i.e. an Ethernet LAN controller and suitable computer program code which receives the global set point information and transfers them to a processing and storage unit, e.g. a processor 520. Further, an interface 530 to sensors 600 and actuators 701 of the central controller 500 receives via a CAN bus 560 current and voltage data from sensors 600 which are also transferred to the processing and storage unit 520. Typically, the interface 530 includes a multifunction relay (MFR). The processing and storage unit 520 and the communication device 510 can e.g. be formed by a computer 540 equipped with an Ethernet interface and a CAN-bus interface to communicate with the MFR. After calculating individual set points for the wind turbines 100-102 in the processing and storage unit 520 such that the global set points of power flow are met, the corresponding set points are distributed to the individual wind turbines 100-102 via the Ethernet 550. Further commands may be issued via the CAN-bus to power switches 701 and/or capacitors (not shown) and reactors (not shown) to adjust active and reactive power to the requested values. Note that Fig. 2 shows, for sake of simplicity, only three wind turbines 100-102. Large wind farms can have more than hundred wind turbines controlled by one central controller 500 which is typically located in a substation but it may also be part of one of the wind turbines.

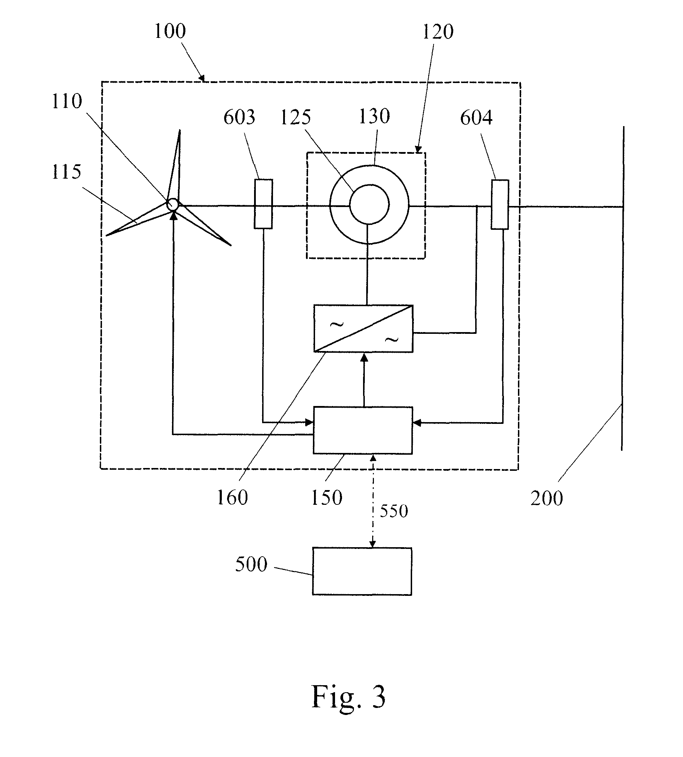

Fig. 3 illustrates the functional components of an exemplary wind turbine 100. In the context of this application, the term wind turbine refers to a machine that converts the kinetic energy of wind into mechanical energy and the mechanical energy into electrical energy using a synchronous or an asynchronous generator. The wind turbine 100 includes a turbine rotor 110, having for exemplification three rotor blades 115, which drives the electrical generator 120. The wind turbine 100 may further have a gearbox (not shown) between the turbine rotor 110 and the generator rotor 125. The generator 120 includes a generator stator 130 having windings (not shown) coupled to the internal grid 200 and a generator rotor 125 having windings (not shown) coupled to a power converter 160, such as the shown variable frequency inverter. The power converter 160 is configured to control the torque produced by the generator by adjusting the excitation voltage to the rotor windings. By controlling the frequency delivered to the generator rotor 125 it is also possible to keep the frequency of the power output of the generator on a stable level independently of the turning speed of the generator rotor 125. The excitation provided by the power converter 160 is based on a torque command and a frequency command transmitted by a turbine controller 150. The turbine controller 150 may include a programmable logic controller (PLC) or a computer operable to implement a torque control algorithm and a frequency control algorithm to ensure a fixed frequency output of required power at variable speed of the generator rotor 125. As known to those skilled in the art, power output of the generator is the product of generator speed and generator torque. The turbine controller 150 typically checks the speed of the generator rotor 125 several times per second using a sensor 603. Accordingly, if speed is known the torque can be adjusted to maintain the power set points obtained from the central controller 500 via the Ethernet LAN 550. The turbine controller 150 can also be operable to control the speed of the generator rotor 125 via regulation of pitch of the rotor blades 115. If the speed of the generator rotor 125 becomes too high or too low, it sends an order to the blade pitch mechanism (not shown) which turns the rotor blades 115 out of and back into the wind, respectively. Further, the wind turbine 100 may be equipped with a sensor 604 measuring e.g. the power, voltage, and /or current output of the generator 120. Note that the variable speed wind turbine 100 equipped with a doubly fed induction generator 120 is shown in Fig. 3 only for exemplification. Any other wind turbine capable of receiving electrical set points such as active and/or reactive power and/or voltage and/or frequency from a supervisory controller and performing a closed loop control at least of the produced active power can be used in the embodiments explained below. The wind turbines may be constant or variable speed and directly or indirectly, i.e. via a frequency inverter converting the variable frequency ac produced by the generator to a fixed frequency ac of the internal grid 200, coupled to the internal grid 200. One advantage of the doubly fed induction generator 120 consists in its ability to provide both active and reactive power to the internal grid 200.

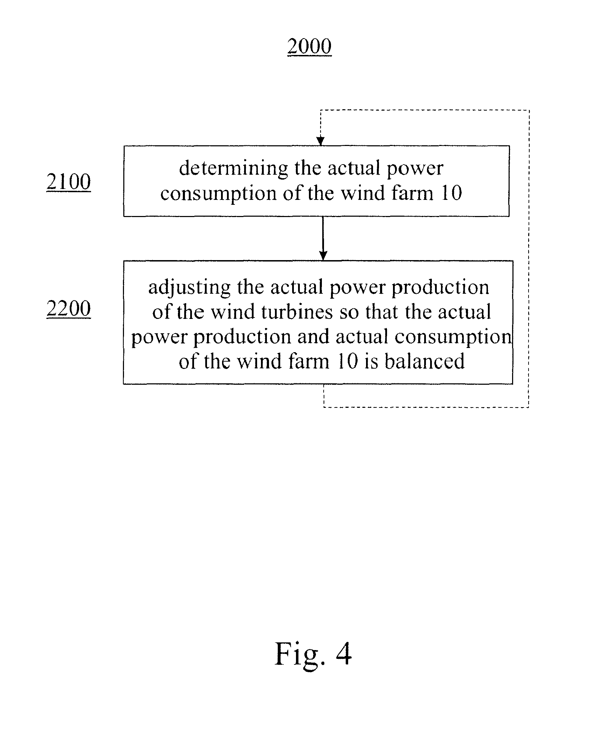

With respect to Fig. 4, a method for operating the wind farm 10 in a balanced state, e.g. in a state wherein the actual (total) power production and actual (total) power consumption of the wind farm 10 is substantially equal, is described. According to a first aspect, the method 2000 of operating the wind farm 10 includes a step 2100 of determining the actual power consumption of the wind farm 10; and a subsequent step 2200 of adjusting the actual power production of the wind turbines such that the actual power production and actual power consumption of the wind farm 10 is balanced. Typically, the power consumption of the wind turbines fluctuates, e.g. due to required heating or cooling processes of the wind turbines or parts thereof. Therefore, the steps 2100 and 2200 are in another aspect performed in a closed loop as indicated by the dashed line arrow of Fig. 4 to maintain the balanced state of the wind farm 10. Typically, a new power command or power instruction is issued at least to one of the wind turbines in step 2200 of each cycle if the actual power consumption of the wind farm 10 deviates from the actual power production.

According to yet another aspect, determining the actual power consumption of the wind farm 10 in step 2100 is based on measuring the actual electrical condition of the internal grid 200. Such a measurement can include measurements of frequency, currents and voltages of all phase lines and/or measurements of derived electrical values such as active power, reactive power or phase lags. As has been explained with reference to Fig. 2, the wind turbines typically regulate their set points themselves. Therefore the produced actual power of the wind farm 10 is known at any given time. If the power production and consumption of the wind farm 10 are balanced, the actual electrical condition of the internal grid 200, i.e. the frequency and/or voltage and/or current and/or phasing of all phase lines of the internal grid 200 matches expected values. In particular, rms voltages and frequency should be constant; and currents and phasing should match values that can be calculated from actual voltages and actual produced active and reactive power. Any deviation of the actual electrical condition of the internal grid 200 from expected values such as frequency or voltage shift can be used to calculate the actual active and actual reactive power consumption. This will be explained in more detail below. Alternatively and/or additionally, the actual power consumption of the wind farm 10 can be calculated from known or measured actual power consumption of all wind turbines and the other electricity consumers with variable power consumption of the wind farm 10. In an example, all wind turbines measures their actual power consumption and send the measured values to the central controller 500.

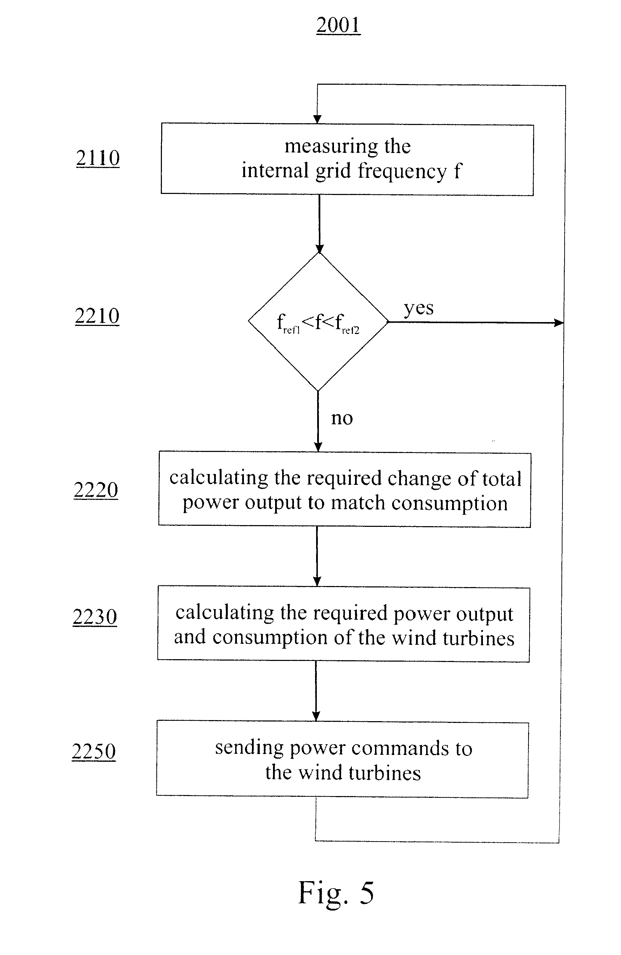

With respect to Fig. 5 yet another aspect will be explained. The method 2001 of operating the wind farm 10 in a state of balanced power production and power consumption performs a closed-loop droop compensation based upon measuring the frequency of the internal grid 200. In a first step 2110 of each cycle the internal grid frequency f is measured using e.g. the sensor 600 shown in Fig. 1. In a subsequent step 2210 the internal grid frequency f is compared with two reference frequencies f_{ref1} and f_{ref2} which are close but lower and higher than the required internal grid frequency of e.g. 50 Hz or 60 Hz, respectively. If the internal grid frequency f is within the range of f_{ref1} and f_{ref2} the actual total power production and actual total consumption of the wind farm 10 are substantially equal or balanced and in the next time step the measuring step 2110 will again be carried out. Otherwise, the change of total power production which is required to match the actual power consumption is calculated in step 2220. If the grid frequency f is lower than f_{ref1}, the total power production has to be increased. If the grid frequency f is higher than f_{ref2}, the total power production has to be decreased. As known to those skilled in the art the required change of total produced power also depend on the actual total power consumption and actual total production, respectively. The actual total power production of the wind farm 10 is, however, known since the power production of the wind turbines is controlled within the loop. Next the required change of total power output is calculated for the individual wind turbines in a step 2230. Changing the power output of a wind turbine may also change its power consumption. This change of power consumption may also be taken into account in step 2230 e.g. by an iterative method based on a typical power consumption -power production characteristics or curve for the used wind turbines. At the end of the cycle the determined individual power set points are issued to the respective wind turbines in a step 2250.

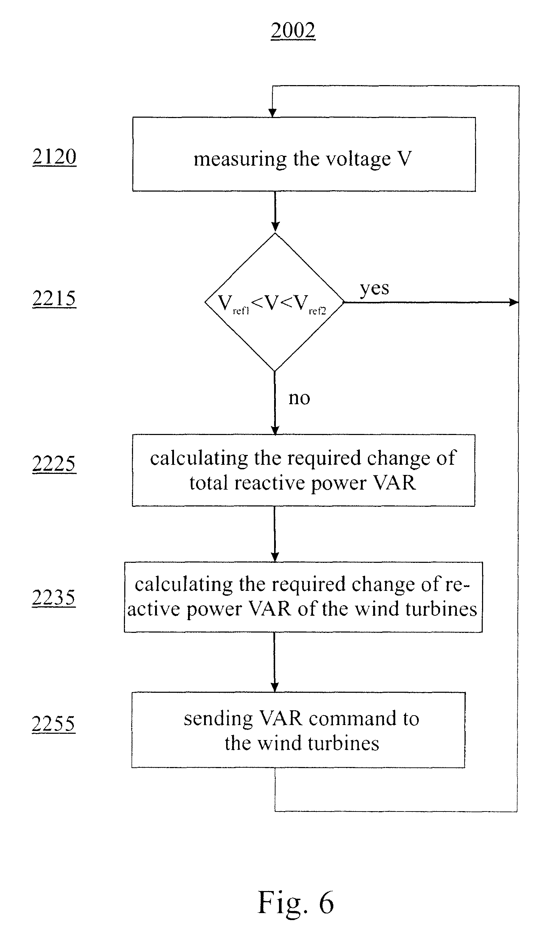

With respect to Fig. 6 still another aspect will be explained. It illustrates a method for controlling the actual reactive power. In a first step 2120 of a closed-loop cycle the internal grid voltage V is measured using e.g. the sensor 600 shown in Fig. 1. In a subsequent step 2215 the internal grid voltage V is compared with two reference values V_{ref1} and V_{ref2} which are close but lower and higher than the required internal grid voltage, respectively. If the grid voltage V is within the range of V_{ref1} and V_{ref2} the actual total reactive power production and actual total reactive power consumption of the wind farm 10 are substantially equal and in the next time step the measuring step 2120 will again be carried out. Otherwise, the change of total reactive power production which is required to match the actual reactive power consumption is calculated in step 2225. If the grid voltage V is lower than V_{ref1}, the total reactive power production has to be increased. If the grid voltage V is higher than V_{ref2}, the total reactive power production has to be decreased. As known to those skilled in the art the required change of total reactive power also depends on the known, currently produced total reactive power. In a subsequent step 2235 the required change of total reactive power output is calculated for the individual wind turbines. At the end of the cycle the determined individual reactive power set points (VAR commands or instructions) are issued to the respective wind turbines in a step 2255.

In still another aspect, both the actual active and the actual reactive power are controlled such that they are in balance. This can e.g. be achieved if both methods 2001 and 2002 are carried out in parallel, e.g. as different threads or in a common loop. In this event neither active power nor reactive power has to be exchanged with the external grid 300. This enables operating of the wind farm 10 without an external grid 300.

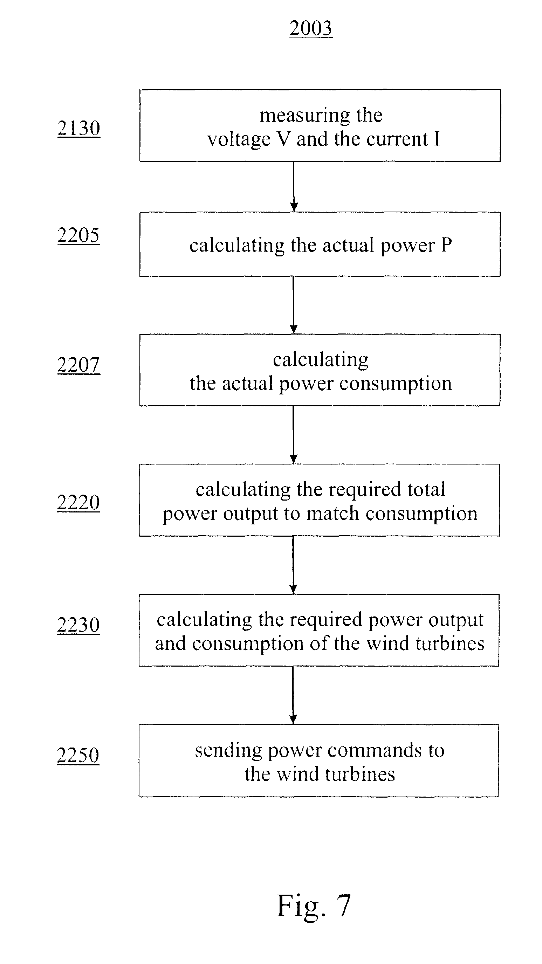

During normal operation the wind farm 10 feeds electric energy into the external grid 300. Typically, the wind farm 10 is operated such the power production is at maximum at given wind condition. The central controller 500 can also regulate the active and/or reactive power flow according to external requests. The amount of power flow to the external grid 300 is typically measured at the point of common coupling (PCC) in the substation 400 using the sensor 601 shown in Fig. 1. In an event of an outage of the external grid 300 all wind turbines are usually disconnected from the internal grid 200 and a fast emergency shut down of all wind turbines of the wind farm 10 is usually carried out. Note that this can also be necessary if the frequency and/or voltage of the external grid 300 exceeds certain thresholds. As will be explained with respect to Fig. 7, all wind turbines of the wind farm 10 can remain connected to the internal grid 200 even if internal and external grids have to be disconnected. This is achieved by driving the wind farm 10 into and operating the wind farm 10 in a balanced state. Since the wind turbines are typically operating according to given set points of active and reactive power, the measurements at the PCC enables calculation of actual active power consumption and actual reactive power consumption of the wind farm 10 at any given time during normal operation with connected internal 200 and external grid 300. According to a further embodiment the method 2003 of operating the wind farm 10 in a state of balanced power production and power consumption performs in a step 2130 a voltage, V, and a current, I, measurement for each phase line using e.g. the sensor 600 shown in Fig. 1. This is followed by calculating the actual power, P, in a step 2205. Instead of measuring currents and voltages the actual power is measured directly using a power meter in an alternative. The steps 2130 and 2205 are typically carried out several times per second during normal operation of the wind farm 10 as part of a closed loop control to ensure the externally requested power flow into the external grid 300. In the event of disconnecting internal 200 and external grid 300, e.g. due to an outage of the external grid 300, the actual power consumption of the wind farm 10 is calculated in a step 2207 from the difference of last measured power flow P and sum of current power set points of the wind turbines. This is followed by a step 2200 of calculating the required total power output to match the calculated actual power consumption of the wind farm 10. Afterwards, the required power outputs of the wind turbines are determined in a step 2230 such that their sum is equal to the total power output of the wind farm 10 obtained in step 2220. Note that the steps 2205, 2207, 2220 and 2230 are typically carried out both for active and reactive power. Accordingly, in step 2250 corresponding VAR commands or instructions are additionally issued to the wind turbines.

In doing so, all wind turbines can remain connected to the internal grid 200. Further all basic system functions, i.e. lubrication, heating, cooling and all control and monitoring functions, of all wind turbines can be maintained. In other words, the wind turbines can be maintained in a state of function standby which allows an immediate start up of the wind turbine later on. This means that instead of disconnecting the individual wind turbines from the internal grid 200 the complete wind farm 10 is separated and can remain functional. Thereby, the wind farm 10 is islanded in a controlled way and the emergency shut down of the wind farm 10 can be avoided during an outage of the external grid 300. This has at least two major advantages. On the one hand, emergency shut downs are accompanied by emergency braking of the wind turbines. This is a high load for the wind turbines that may limit their life time. On the other hand, it can take a long time (up to days under extreme cold weather conditions) to heat up the systems of the wind turbines again and to bring them back to service after recovery of the external grid 300.

The wind farm 10 can further include an ac or dc energy storage system (not shown in Fig. 1) for buffering electrical energy and/or currents of the internal grid 200. In still another aspect, the method for operating the wind farm 10 in a balanced state includes a step of buffering electrical energy of the internal grid 200. Such an electrical buffering system can include a battery, a magnetic energy storage such as a superconducting device, a flywheel device, capacitors or a combination thereof which are e.g. connected in parallel to the wind turbines. The energy storage system is typically coupled to the internal grid 200 using a frequency inverter (not shown in Fig. 1) converting the power and/or current flow between the fixed frequency ac of the internal grid 200 and the frequency used in the energy storage system. Flywheels store kinetic energy in a rapidly rotating mass of the rotor. In particular, if the rotor is magnetically levitated huge amounts of energy can be stored at high rotating speed. Supercapacitors and flywheels can be charged and can release their energy within seconds; superconducting coils can take up and provide megawatts of power almost instantaneously with efficiency close to 100%. Reactive and/or active power compensation systems are particularly useful in case of disconnecting internal 200 and external 300 grid. Note, that in the event of an outage of the external grid 300 the total power output of the wind farm 10 has to be reduced to the amount balancing the actual total power consumption of the wind farm 10 within a few ten ms. This can required steep down ramping rates of the wind turbines. In the context of this application, the terms of ramping up and down a wind turbine refer to increasing and decreasing the power output of the wind turbine, respectively. The rates for ramping down the wind turbines can be reduced if a part of the produced active and/or reactive power can be stored in a temporary buffer system. The buffered energy may be fed back into the external grid 300 after its recovery.

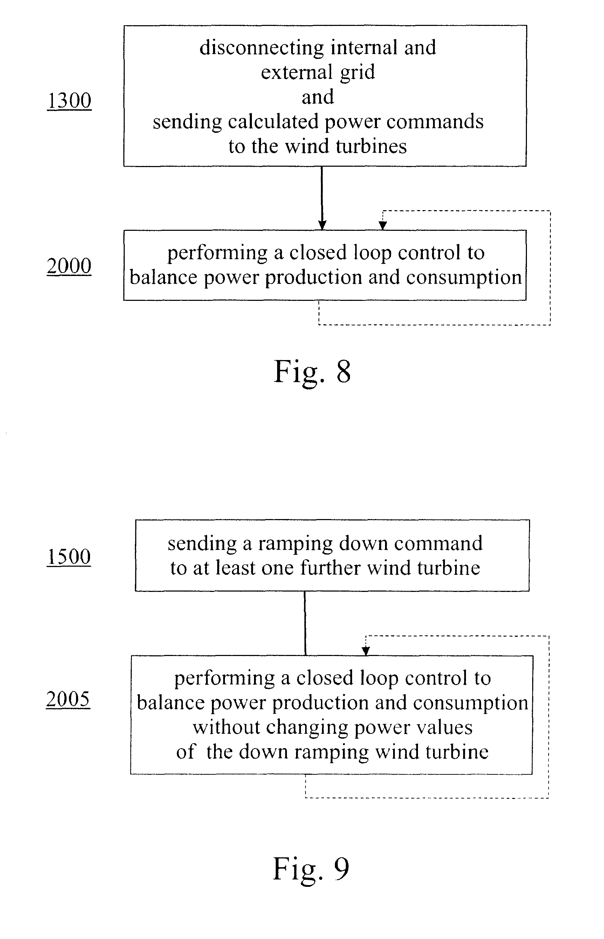

With reference to Fig. 8 yet another aspect will be explained. Accordingly, the wind farm 10 is, in a first step 1300, disconnected from the external grid 300 and ramped down such that actual power consumption and actual power production are matched. This can e.g. be achieved as has already been explained with reference to Fig. 7. In a subsequent step 2000 the wind farm 10 is maintained in the balanced state using e.g. the methods 2001 and/or 2002. The step 2000 is typically carried out in a closed loop as indicated by the dashed-line arrow in Fig. 8. All wind turbines can remain connected to the internal grid 200 but at least a part of the wind turbines has to be ramped down. After recovery of the external grid 300 the wind turbines need not to be restarted and heated up. Only the internal 200 and external grid 300 have to be synchronized and reconnected; and the wind turbines have to be ramped up again.

Thus, the wind farm 10 will be able to feed again power into the external grid 300 with a much shorter delay after external grid recovery compared to the event of disconnecting all wind turbines from the internal grid 200 and shutting them down completely. Note that a wind turbine has typically to be started very slowly if the external temperature is low, in the extreme case over a matter of hours, in order to allow thereby a very uniform heating of all constituents before the wind turbine can provide full power.

The minimum power output of a wind turbine may be limited, i.e. operation of a wind turbine at power level between a minimum value and 0 % may not be possible. Typically, the power output of each wind turbine can be reduced down to a few %, e.g. to 1% or 5% of full power in a linear manner. Accordingly, the total power output of the wind farm 10 can typically be reduced from 100 % to a few %, e.g. to 1% or 5% of rated full capacity in a linear manner too. Particularly for large (MW producing) wind turbines, the total power consumption of the wind turbines and the other electricity consumers of the wind farm 10 like sensors, the transformer substation 400 and the central controller 500 may be below the minimum amount of power the wind farm 10 can produce if all wind turbines deliver electrical power. In another embodiment, one or a part of the wind turbines are, therefore, set to consume energy only. In other words, those wind turbines are issued to produce no power, i.e. they are controlled to ramp down to zero power production in a step 1500 as shown in Fig. 9. Again, all wind turbines can remain connected to the internal grid 200 and all system functions of all wind turbines can be maintained. A parallel step 2005 of controlling power production and consumption without changing power values of the down ramping wind turbines ensures that the wind farm 10 is maintained in the balanced state. This can again be achieved using the methods 2001 and/or 2002 but without changing the power set points of the down ramping or down ramped wind turbines. The step 2005 is again typically carried out in a closed loop. Ramping down a part of the wind turbines in a wind farm 10 can also be advantageous during an outage of the external grid 300. In such an event only a part, e.g. two, of the wind turbines are typically scheduled to produce power, whereas the remaining wind turbines are set to produce no power in the step 2250 of the method 2003 of Fig. 7.

Even one wind turbine may be enough to provide enough power for maintaining the system functions of the remaining wind turbines and to feed the other electrical consumers of the wind farm 10. However, even in this event at least two wind turbines may be used to produce power as fluctuating wind conditions can be better balanced with two wind turbines.

In a further example, one or a part of the wind turbines are set to produce only reactive power to compensate the actual reactive power consumption of the active power producing wind turbines and other consumers of the internal grid 200 such as the transformers. In still a further example, a part of the wind turbines of the wind farm 10 may be stopped completely. This will reduce wear in the event of a longer lasting outage of the external grid 300.

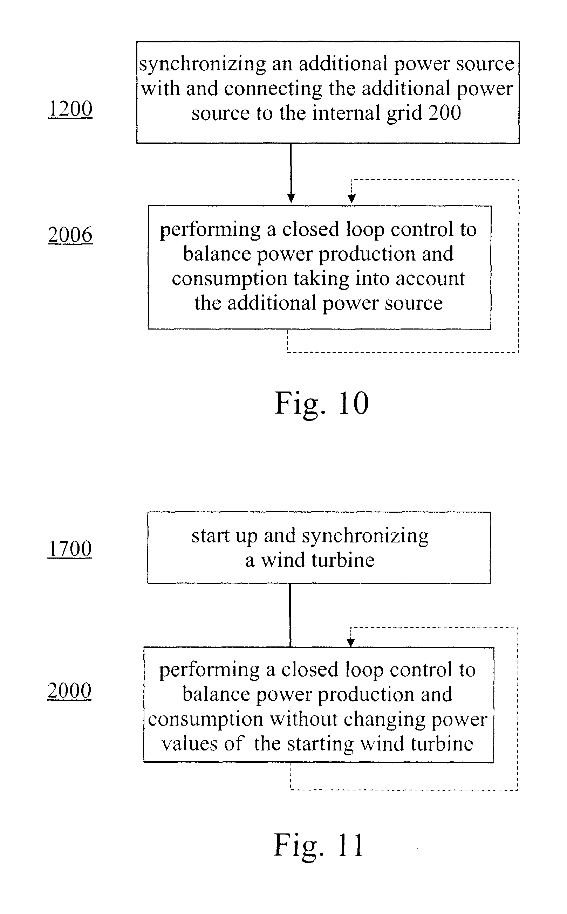

As has already been explained with reference to Fig. 1, the wind farm 10 can further include an additional ac or dc power source 900, such as of a fuel power source, a battery-based power source or a solar power source. Further, the additional power source 900 may be coupled to the internal grid 200 using a frequency inverter (not shown) to convert the power flow between the fixed frequency ac of the internal grid 200 and the additional power source. According to yet a further aspect, the method for operating the wind farm 10 in a balanced state includes a step 1200 of synchronizing the additional power source 900 with and connecting the additional power source 900 to the internal grid 200. As illustrated in Fig. 10, this is followed by a step 2006 in which a closed loop control for balancing actual power production and actual power consumption of the wind farm 10 is carried out. Those skilled in the art will appreciate, that any of the above mentioned methods for operating the wind farm in a balanced state can be modified such that the produced power of the additional power source 900 is additionally taken into account. In the following example a 100 kW diesel aggregate is used as additional power source 900. In the step 1200 the diesel aggregate is switched on and synchronized without feeding power into the internal grid 200. Synchronization includes matching voltage, frequency and phases and can e.g. be done by regulating the generator speed through an engine governor e.g. by using an auto-synchronizer. After synchronization the diesel aggregate can be connected to the internal grid 200. Than the produced power of the diesel aggregate is increased in the loops of step 2006 such that power production of the wind turbines and the diesel aggregate matches the power consumption of the wind farm. This can e.g. be achieved using a method which is similar to the method 2005 of Fig. 9 but takes into account the increasing power output of the diesel aggregate in step 2006 of each cycle.

If the additional power source 900 produces enough power to maintain all system functions of all wind turbines, the method for operating the wind farm 10 in a balanced state may includes a further step of ramping down all wind turbines together, in groups or one by one. All wind turbines can remain connected to the internal grid in a state of function standby wherein all system functions of the wind turbines are maintained. This will allow maintenance work e.g. during an outage of the external grid 300 and a fast reconnecting of the wind farm 10 after recovery of the external grid 300.

Additionally, a part of the wind turbines or all wind turbines of the wind farm 10 may be stopped completely i.e. shut off. In the event of an expected longer lasting outage of the external grid 300 this will allow saving of fuel or energy and reduces wear.

With respect to Fig. 11 still another aspect will be explained. For example, in preparation of an impending recovery of the external grid 300 those wind turbines that were shut down to a state of function standby or even shut off are restarted and synchronized to the internal grid 200 in a step 1700. In parallel a closed loop control step 2000 of matching actual power production and actual power consumption but without changing the power set points of the starting wind turbine is carried out to maintain the wind farm 10 in the balanced state. This can e.g. be achieved using the methods 2001 and/or 2002. The step 2000 is again typically carried out in a closed loop as indicated by the dashed line arrow. For example, in the event that all wind turbines were completely shut off an additional power source 900 like a diesel aggregate which is connected to the internal grid 200 is used to restart a first wind turbine. After synchronizing the first wind turbine it is connected to the internal grid 200. After synchronizing one, a few or all wind turbines, the additional power source 900 can ramped down again and eventually switched off. To balance power production and power consumption at least one wind turbine is ramped up in parallel. Finally, the internal grid 200 and external 300 grid are synchronized after recovery of the external grid 300 and all wind turbines can be ramped up to produce full power or the externally requested amount of total power again.

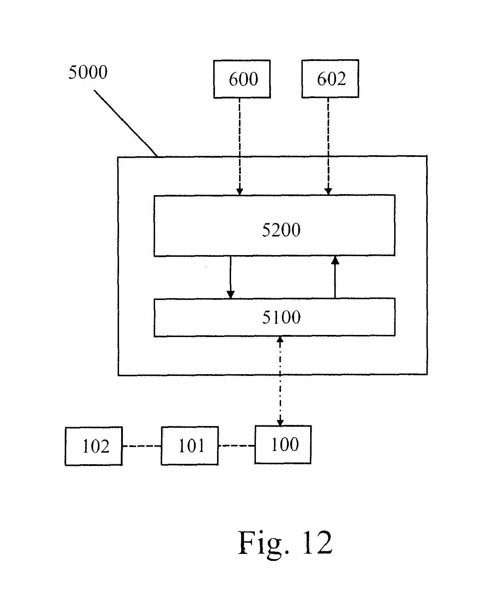

With respect to Fig. 12 a wind farm control system 5000 is provided. It includes a communication device 5100 which is adapted to r transmit set points such as power commands or power generating instructions to the wind turbines 100 - 102 of the wind farm 10. Typically, the communication device 5100 is also adapted to receive set points and/or data and/or commands from the wind turbines. The wind farm control system 5000 further includes a controller 5200 which is adapted to determine the actual power consumption and actual power balance of the wind farm 10. Further, the controller 5200 is configured to determine power orders or power generating instructions for the wind turbines 100 - 102 of the wind farm 10. According to an embodiment, the wind farm control system 5000 is arranged for controlling the wind farm 10 in a balanced state of substantially equal power consumption and power production. The wind farm control system 5000 is in particular operable to execute any of the above described methods for operating the wind farm 10 in a balanced state.

As explained above, the actual power consumption of the wind farm 10 can be determined from parameters characterizing the actual electrical condition of the internal grid 200, such as grid voltage and/or frequency and /or power flow. According to a further aspect, the controller 5200 includes a frequency sensor and/or a voltage sensor and/or a current sensor and/or a power sensor 600 for determining the actual electrical condition of the internal grid 200; and a processor adapted to calculate the power balance of the wind farm 10 and to determine power orders or power generating instructions for each of the wind turbines 100 - 102. Additionally and/or alternatively, the wind farm control system 5000 may also take into account power consumption values measured by the individual wind turbines 100 - 102 and other power consumers within the internal grid 200 for calculating the total power consumption of the wind farm 10. For power consumers with predictable consumption such as transformers, capacitors or the like measurement of consumption may be replaced by calculations based on respective electric models.

Typically, both active and reactive power production of the wind farm 10 are balanced to the active and reactive power consumption by the wind farm control system 5000.

Further, the communication device 5100 of the wind farm control system 5000 is typically operable to transmit power set points to and receive data and/or instructions from an additional power source 900 and/or an energy storage device and/or further sensors and/or actuators.

In yet another aspect, the wind farm control system 5000 includes a sensor 602 for measuring the actual electrical condition of the external grid 300. This enable the wind farm control system 5000 to detect an outage or an under voltage and/or under frequency condition of the external grid 300. In such an event the wind farm control system 5000 can independently disconnect the internal 200 and the external grid 300 and operate the wind farm 10 in a balanced state. Thereby, the wind farm 10 is islanded in a controlled way and the emergency shut down of the wind farm 10 can be avoided during an outage of the external grid 300. Further, the external grid 300 can rapidly be stabilized in the event of a detected under voltage and/or under frequency condition of the external grid 300. After recovery or stabilizing of the external grid 300, the internal grid 200 can be synchronized with and be reconnected to the external grid 300 with minimum delay as all basic system functions of the wind turbines 100 - 102 can be maintained during the controlled islanding of the wind farm 10.

According to still another aspect, the central wind farm controller 500 described with reference to Fig. 2 operates as controller 5200. In an alternative, these functions are provided by one of the wind turbines 100 - 102. In this event the hardware of the turbine controller 150 of the supervising wind turbine must be powerful enough to run the additional software or computer program code related to the wind farm control system 5000.

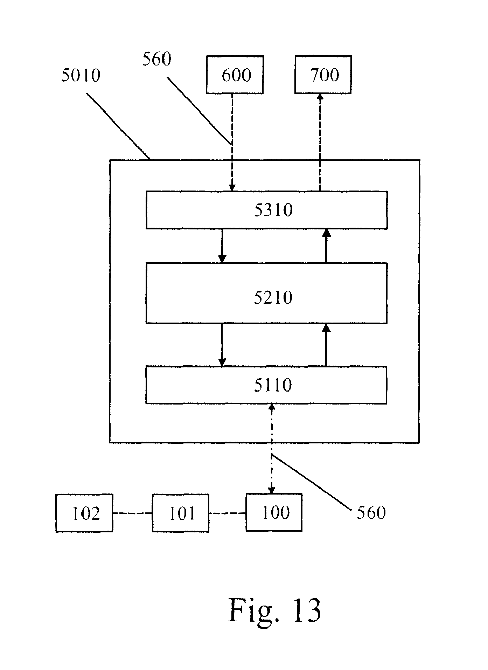

With respect to Fig. 13, a computer program 5010 for use in a wind farm control system 5000 is provided. The program 5010 includes a computer program code module 5310 for receiving and evaluating or pre-processing the data from the sensors 600 of the wind farm control system 5000. Further, the module 5310 may additionally include computer code for transmitting data to sensors 600 and /or actuators 700. Typically, the module 5310 runs on a multifunction relay which transduces and digitizes data of the sensors and communicates the results over the CAN-bus 560 to a computer program code module 5210. Alternatively and or additionally the module 5210 receives via the Ethernet network or bus 560 measured power consumption e.g. from the wind turbines 100 - 102. The module 5210 calculates the actual power balance of the wind farm 10 and determines power orders for the wind turbines 100 - 102 such that the actual power production and actual power consumption of the wind farm 10 are balanced. Typically, the module 5210 carries out these calculations for both active and reactive power. The computer program 5010 further includes a program code module 5110 to transmit power and or VAR orders or instructions to the wind turbines 100 via the Ethernet bus 560. Further, the module 5210 may determine instructions for additional devices like power switches 700, energy storage devices, additional power devices 900 or the like. Theses instructions are typically transmitted via the CAN- or the Ethernet- bus too. The computer program code modules 5110 and 5210 run typically on a single computer, e.g. in one of the wind turbines 100 or on the central controller 500 of the wind farm 10.

Typically, the computer program 5010 is a real time program. This allows fast reliable balancing of the power production and consumption of the wind farm 10 and reduces the requirements on the energy buffer capability of the wind farm 10 and/or on the hardware tolerances against power fluctuations.

This written description uses examples to disclose embodiments, including the preferred mode, and also to enable any person skilled in the art to make and use such embodiments. While various specific embodiments have been described, those skilled in the art will recognize other embodiments can be practiced with modification within the spirit and scope of the claims. Especially, mutually non-exclusive features of the embodiments described above may be combined with each other. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are now defined in the following numbered clauses:
1. A method for operating a wind farm, the wind farm comprising a wind farm control system and at least two wind turbines connected via an internal grid, the method comprising:
   determining the actual power consumption of the wind farm; and
   adjusting the actual power production of at least one of the wind turbines so that the actual power production and actual power consumption of the wind farm are substantially equal.
2. The method for operating a wind farm according to clause 1, wherein determining the actual power consumption of the wind farm; and
   adjusting the actual power production of the wind turbines so that the actual power production and actual power consumption of the wind farm are substantially equal are closed-loop controlled.
3. The method for operating a wind farm according to any preceding clause, wherein determining the actual power consumption of the wind farm comprises measuring the actual electrical condition of the internal grid.
4. The method for operating a wind farm according to any preceding clause, wherein measuring the actual electrical condition of the internal grid comprises measuring the actual voltage and/or actual current and/or actual frequency of the internal grid.
5. The method for operating a wind farm according to any preceding clause, wherein substantially no current and/or power is exchanged with an external grid to which the wind farm is connected.
6. The method for operating a wind farm according to any preceding clause, further comprising:
   ramping down at least one further wind turbine of the wind farm.
7. The method for operating a wind farm according to any preceding clause, wherein at least one further wind turbine is controlled to produce substantially no power.
8. The method for operating a wind farm according to any preceding clause, wherein the wind turbines of the wind farm remain connected to the internal grid while the wind farm is disconnected from an external grid.
9. The method for operating a wind farm according to any preceding clause, wherein the at least one further wind turbine, which is controlled to produce no power, is maintained in a state of function standby allowing immediate start up of the wind turbines.
10. The method for operating a wind farm according to any preceding clause, further comprising starting up the at least one further wind turbine from the state of function standby; and
   synchronizing the at least one further wind turbine with the internal grid.
11. The method for operating a wind farm according to any preceding clause, further comprising:
   disconnecting the wind farm from an external grid.
12. The method for operating a wind farm according to any preceding clause, wherein the wind farm is disconnected from the external grid during a power outage or an over voltage condition or an over frequency condition of the external grid.
13. The method for operating a wind farm according to any preceding clause, wherein the wind farm further comprises an additional energy storage selected from a group consisting of a battery-based power source, a superconducting magnetic energy storage device, a flywheel device, a capacitor or a combination of the foregoing, further comprising:
   buffering electrical energy of the internal grid in the additional energy storage device after disconnecting the wind farm from the external grid.
14. A method for operating a wind farm, the wind farm comprising a wind farm control system and several power sources connected to each other via an internal grid, wherein at least two of the power sources are wind turbines and at least one power source is an additional power source selected from a group consisting of a fuel power source, a battery-based power source and a solar power source; the method comprising:
   determining the actual power consumption of the wind farm; and
   adjusting the actual power production of at least one power source so that the actual power production and actual power consumption of the wind farm are substantially equal.
15. The method for operating a wind farm according to clause 14, further comprising:
   connecting the at least one additional power source to the internal grid; and
   synchronizing the at least one additional power source with the internal grid.
16. The method for operating a wind farm according to clause 14 or 15, further comprising:
   ramping down the wind turbines in the wind farm.
17. A wind farm control system arranged for controlling a wind farm, comprising:
   a controller adapted to determine the actual power consumption and the actual power balance of the wind farm, and adapted to determine power generation instructions for each of the wind turbines; and
   a communication device adapted to transmit said power generation instructions to each of the wind turbines;
   such that the wind farm control system can operate the wind farm in a balanced state, in which the power produced within the wind farm substantially equals the power consumed by the wind farm.
18. The wind farm control system according to clause 17, wherein the controller comprises:
   a frequency sensor and/or a voltage sensor and/or a current sensor and/or a power sensor for determining an actual electrical condition of an internal grid of the wind farm; and
   a processor adapted to calculate the power balance of the wind farm and to determine power generation instructions for each of the wind turbines.
19. The wind farm control system according to clause 17 or 18, further comprising:
   a sensor for detecting the actual electrical condition of an external grid.
20. The wind farm control system according to any of clauses 17 to 19, wherein a central wind farm controller or one of the wind turbine controllers operates as said controller.

## Claims

1. A method for operating a wind farm (10) comprising a wind farm control system (5000), at least two wind turbines (100, 101) connected via an internal grid (200), comprising:
determining the actual power consumption of the wind farm (10); and
adjusting the actual power production of the wind turbines (100, 101) so that the actual power production and actual power consumption of the wind farm (10) are substantially equal.

2. The method for operating a wind farm (10) according to claim 1, wherein
determining the actual power consumption of the wind farm (10); and
adjusting the actual power production of the wind turbines (100,101) so that the actual power production and actual power consumption of the wind farm (10) are substantially equal and/or wherein the wind turbines (100,101) are closed-loop controlled.

3. The method for operating a wind farm (10) according to claim 1 or 2, wherein determining the actual power consumption of the wind farm (10) comprises measuring the voltage and/or current and/or frequency of the internal grid (200).

4. The method for operating a wind farm (10) according to any of the preceding claims, wherein substantially no current and/or power is exchanged with an external grid (300) to which the wind farm (10) is connected and/or wherein the internal grid (200) of the wind farm (10) is disconnected from the external grid (300).

5. The method for operating a wind farm (10) according to any of the preceding claims, further comprising:
ramping down at least one further wind turbine (100).

6. The method for operating a wind farm (10) according to any of the preceding claims, wherein at least one of the wind turbines (100, 101) is controlled to produce no energy and is maintained in a state of function standby allowing immediate start up of the wind turbines (100, 101).

7. The method for operating a wind farm (10) according to any of the preceding claims, wherein the wind farm (10) further comprises an additional power source (900) selected from a group consisting of a fuel power source, a battery based power source and a solar power source, further comprising:
synchronizing the additional power source (900) with the internal grid (200); and
connecting the additional power source (900) to the internal grid (200).

8. The method for operating a wind farm (10) according to any of the preceding claims, further comprising
starting up at least one further wind turbine (100) from the state of function standby; and
synchronizing the at least one further wind turbine (100) with the internal grid (200).

9. A wind farm control system (5000) arranged for controlling a wind farm (10), comprising:
a controller (5200) adapted to determine the actual power consumption and the actual power balance of the wind farm (10) and adapted to determine power generation instructions for the wind turbines (100, 101); and
a communication device (5100) adapted to transmit said power generation instructions to each of the wind turbines (100, 101);
such that the wind farm control system (5000) can operate the wind farm (10) in a balanced state, in which the power produced within the wind farm (10) substantially equals the power consumed by the wind farm.

10. The wind farm control system (5000) according to claim 9, wherein the control device comprises:
a frequency sensor and/or a voltage sensor and/or a current sensor and/or a power sensor (600) for determining the actual electrical condition of an internal grid (200); and
a processor (520) adapted to calculate the power balance of the wind farm (10) and to determine power instructions for each of the wind turbines (100, 101).
